# EUROPEAN PATENT APPLICATION

(11) **EP 3 561 754 A1**
(43) Date of publication of application: **30.10.2019**
(21) Application number: 17884119.3
(22) Date of filing: 15.12.2017
(51) Int. Cl.: G06Q 20/36

(54) **VIRTUAL RESOURCE ALLOCATION METHOD, CLIENT AND SERVER**

(30) Priority: 23.12.2016 CN 201611205582
(71) Applicant: Alibaba Group Holding Limited, Grand Cayman (KY)
(72) Inventor: LIU, Lindong, Hangzhou, Zhejiang 311121 (CN)
(74) Representative: Conroy, John
(86) International application number: PCT/CN2017/116498
(87) International publication number: WO 2018/113600

(57) **Abstract**

Implementations of the present application disclose a method and apparatus for allocating virtual resources. The method includes: displaying an interface for allocating virtual resources to the first account, and obtaining a predetermined operation behavior of a user in the interface; obtaining a behavior parameter value of the predetermined operation behavior; and allocating, from the second account to the first account, virtual resources whose amount matches the behavior parameter value. According to the implementations of the present application, virtual resource allocation can satisfy a user's intent, and the interest in a virtual resource allocation process can be improved.

## Description

### TECHNICAL FIELD

The present application relates to the field of data processing technologies, and in particular, to a method and apparatus for allocating virtual resources.

### BACKGROUND

Currently, virtual resources are widely used in daily online payments, and the virtual resources include virtual currencies, bonus points, game points, etc. The virtual currencies gradually replace traditional bank bills and are widely used in people's daily life. Users can complete a plurality of payment activities such as credit card payment, sending a red envelope, and checking out after shopping by using an application (APP) that is installed in a client and that has a virtual currency payment function. In conclusion, the virtual resources can be used for consumption deduction, and have a certain usage value.

A network makes it easier for users to obtain information, and the users are also used to post information such as opinions, personal life records, etc. in a personal network life circle. As the users gradually recognize information value, in the existing technology, the users can pay certain virtual resources for information such as opinions and life records posted by other users, to show appreciation or praise for the information author. An existing virtual resource payment method includes the following: A user taps a trigger control element of virtual resource payment in an interface, and a client or a server randomly generates an amount of virtual resources in response to the trigger of the user, and displays the amount to the user. After confirming the amount, the user can tap the payment trigger control element to complete payment.

The previous method for paying virtual resources to the author's account to show appreciation for information includes at least the following problem: The amount of virtual resources randomly generated by the client or the server may not satisfy an expected amount of the user, and the user needs to perform an operation such as tapping for a plurality of times in a process of paying the virtual resources, thus, the user experience is poor.

### SUMMARY

An objective of implementations of the present application is to provide a method and apparatus for allocating virtual resources, so that virtual resource allocation can satisfy a user's intent, and the interest in a virtual resource allocation process can be improved.

Specific implementations of the method and apparatus for allocating virtual resources according to the implementations of the present application are as follows:
A method for allocating virtual resources is provided, and the method includes: displaying an interface for allocating virtual resources to the first account, and obtaining a predetermined operation behavior of a user in the interface; obtaining a behavior parameter value of the predetermined operation behavior; and allocating, from the second account to the first account, virtual resources whose amount matches the behavior parameter value.

A method for allocating virtual resources is provided, and the method includes: obtaining a predetermined operation behavior of a user in an interface; obtaining a behavior parameter value of the predetermined operation behavior; and allocating, from the second account to the first account, virtual resources whose amount matches the behavior parameter value.

A client is provided, and the client includes a display and a processor, where the display is configured to display an interface for allocating virtual resources to the first account, and the processor includes: an operation behavior acquisition unit, configured to obtain a predetermined operation behavior of a user in the interface; an operation behavior analyzing unit, configured to obtain a behavior parameter value of the predetermined operation behavior; and a virtual resource allocation unit, configured to allocate, from the second account to the first account, virtual resources whose amount matches the behavior parameter value.

A server is provided, and the server includes: an operation behavior acquisition unit, configured to obtain a predetermined operation behavior of a user in the interface; an operation behavior analyzing unit, configured to obtain a behavior parameter value of the predetermined operation behavior; and a virtual resource allocation unit, configured to allocate, from the second account to the first account, virtual resources whose amount matches the behavior parameter value.

According to the method and apparatus for allocating virtual resources provided in the present application, the predetermined operation behavior of the user in the virtual resource allocation interface can be analyzed, to obtain the behavior parameter value of the predetermined operation behavior, and then the virtual resources whose amount matches the behavior parameter value are allocated from the second account to the first account. In the implementations, the amount of virtual resources is associated with the operation behavior of the user. Therefore, the amount of virtual resources satisfies an intent and preference of the user. Compared with a randomly generated amount of virtual resources that are to be allocated in the existing technology, an amount, of virtual resources that are to be allocated, obtained according to the method provided in the present application satisfies an expectation of the user. In addition, the method for allocating virtual resources based on the operation behavior of the user increases the interest of interaction between the user and the interface, and improves user experience.

### BRIEF DESCRIPTION OF DRAWINGS

To describe the technical solutions in the implementations of the present application or in the existing technology more clearly, the following briefly describes the accompanying drawings needed for describing the implementations or the existing technology. Apparently, the accompanying drawings in the following description merely show some implementations of the present application, and a person of ordinary skill in the existing technology can still derive other drawings from these accompanying drawings without creative efforts.
FIG. 1 is a method flowchart illustrating an implementation of a method for allocating virtual resources, according to the present application;
FIG. 2 is a schematic diagram illustrating user interface 1 in an application scenario, according to the present application;
FIG. 3 is a schematic diagram illustrating user interface 2 in an application scenario, according to the present application;
FIG. 4 is a schematic diagram illustrating user interface 3 in an application scenario, according to the present application;
FIG. 5 is a method flowchart illustrating another implementation of a method for allocating virtual resources, according to the present application;
FIG. 6 is a schematic structural diagram illustrating modules in an implementation of a client, according to the present application; and
FIG. 7 is a schematic structural diagram illustrating modules in an implementation of a server, according to the present application.

### DESCRIPTION OF IMPLEMENTATIONS

To make a person skilled in the existing technology understand the technical solutions in the present application better, the following clearly and comprehensively describes the technical solutions in the implementations of the present application with reference to the accompanying drawings in the implementations of the present application. Apparently, the described implementations are merely some but not all of the implementations of the present application. All other implementations obtained by a person of ordinary skill in the existing technology based on the implementations of the present application without creative efforts shall fall within the protection scope of the present application.

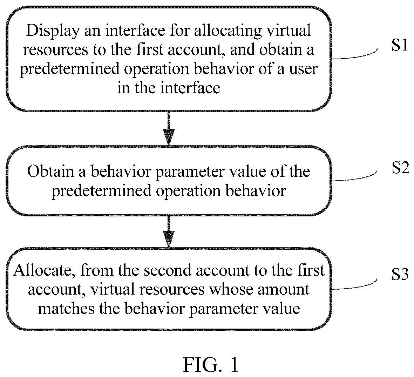

The following describes in detail a method for allocating virtual resources in the present application with reference to the accompanying drawings. FIG. 1 is a schematic flowchart illustrating an implementation of a method for allocating virtual resources, according to the present application. Although the present application provides method operation steps shown in the following implementations or accompanying drawings, the method can include more or fewer operation steps based on a conventional or non-creative effort. For steps that have no necessary logical causal relationship, an execution sequence of the steps is not limited to an execution sequence provided in the implementations of the present application. The method can be performed in an actual virtual resource allocation process based on the sequence illustrated in the implementations or the accompanying drawing or in parallel (e.g., in a parallel processor or multi-threaded processing environment).

Specifically, as shown in FIG. 1, the present application provides an implementation of a method for allocating virtual resources, and the method can include the following steps.

S1. Display an interface for allocating virtual resources to the first account, and obtain a predetermined operation behavior of a user in the interface.

In the present implementation, a client can display the interface for allocating the virtual resources to the first account, and obtain the predetermined operation behavior of the user. In the present implementation, the client can be a terminal device that can access a communications network based on a network protocol and that has a virtual resource delivery function. Specifically, for example, the client can be a mobile smartphone, a computer (including a notebook computer, a desktop computer), a tablet electronic device, a personal digital assistant (PDA), an intelligent wearable device, etc. In addition, the client can be an APP that runs on any one of the previously listed devices and that has a virtual resource payment function, for example, ALIPAY, WeChat, or Ding Talk.

In the present implementation, the virtual resources can include resources that can be used for online payment, such as a red envelope, bonus points, coupons, game cards, or bitcoins. In other implementations, the virtual resources can further include any virtual resources that have a usage value. Implementations are not limited in the present application.

As described above, when the user pays any amount of virtual resources to another user by using the client, the user can tap a predetermined trigger control element displayed in a user interface of the client. The predetermined trigger control element can display prompt keywords including "pay", "bonus", etc. In an implementation of the present application, when detecting, through listening, an event of tapping the predetermined trigger control element by the user, the client can display the interface for allocating the virtual resources to the first account. The interface can include at least information such as an identifier of the first account, and the first account can include, for example, an account of a payment target. When displaying the interface, or after displaying the interface, the client can obtain the predetermined operation behavior of the user. Specifically, the obtaining a predetermined operation behavior of a user can include the following: monitoring the predetermined operation behavior of the user, and recording the predetermined operation behavior.

In the existing technology, an amount of virtual resources paid by the second account to the first account is randomly generated by a client or a server. In the present implementation, an amount of virtual resources paid by the second account can be associated with the predetermined operation behavior of the user, and the second account can include, for example, a login account of the user. In an implementation of the present application, the predetermined operation behavior can include a predetermined operation gesture of the user in the interface. For example, the predetermined operation gesture can include tapping the interface, sliding on the interface, moving a device that displays the interface, etc. Implementations are not limited in the present application.

In another implementation of the present application, the predetermined operation behavior can further include a biometric feature behavior of the user. For example, the biometric feature behavior can include a plurality of behaviors such as observing the interface by the user, making a sound by the user, and making a facial expression by the user. Implementations are not limited in the present application.

It is worthwhile to note that the predetermined operation behavior can include an interaction behavior between the user and the client or a client interface. Implementations are not limited in the present application.

S2: Obtain a behavior parameter value of the predetermined operation behavior.

The following describes how to allocate a corresponding amount of virtual resources based on the predetermined operation behavior of the user in the present application. After obtaining the predetermined operation behavior of the user, the client can perform analysis processing on the predetermined operation behavior, to obtain the behavior parameter value of the predetermined operation behavior. The behavior parameter value can be used as a reference value for allocating the amount of virtual resources.

As described above, the predetermined operation behavior can include the predetermined operation gesture of the user in the interface. For example, the predetermined operation gesture can include tapping the interface, sliding on the interface, moving the device that displays the interface, etc.

In an implementation of the present application, if the predetermined operation gesture includes tapping the interface, a behavior parameter value of the predetermined operation gesture can include at least one of the following: tapping strength, a tapping frequency, and a tapping time.

In the present implementation, when the user taps the interface, the client can sense behavior parameters of a tapping gesture by using a display screen that displays the interface. The display screen can include a capacitive touchscreen, a resistive touchscreen, etc. The display screen can feed back different behavior parameter values to the client based on different parameters such as strength, a frequency, and a time of tapping performed by the user.

In an implementation of the present application, an association relationship between the amount of virtual resources that are to be allocated and a quantity of times the user taps the interface within a predetermined time interval can be set. For example, the association relationship includes a direct proportional relationship. In a specific scenario, the more times the user taps the interface within one minute, the amount of virtual resources that are to be allocated is larger. In another implementation of the present application, it can be further set that the quantity of times the user taps the interface within the predetermined time interval is in inverse proportion to the amount of virtual resources that are to be allocated, to be specific, the faster the user taps the interface, the amount of virtual resources that are to be allocated is smaller. In another implementation of the present application, it can be further set that the amount of virtual resources that are to be allocated is associated with all parameters such as the strength, the frequency, and the time of the tapping behavior performed by the user. Implementations are not limited in the present application.

It is worthwhile to note that the tapping behavior performed by the user on the interface is not limited to using a finger, and an auxiliary tool such as a capacitive pen or touchscreen gloves can also be used. Implementations are not limited in the present application.

In an implementation of the present application, if the predetermined operation gesture includes sliding on the interface, a behavior parameter value of the predetermined operation gesture can include at least one of the following: a sliding amplitude, a sliding frequency, a sliding time, a sliding track, and a sliding strength.

In the present implementation, when the user slides on the interface, the client can sense behavior parameters of a slide gesture by using a display screen that displays the interface. For example, the display screen can include a capacitive touchscreen, a resistive touchscreen, etc. The display screen can feed back different parameter values to the client based on different parameters such as amplitude, a frequency, a time, strength, and a track of sliding performed by the user.

In an implementation of the present application, an association relationship between the amount of virtual resources that are to be allocated and a parameter value of the sliding amplitude can be set. For example, the association relationship includes a direct proportional relationship, to be specific, the larger amplitude the user slides on the interface, the amount of virtual resources that are to be allocated is larger. In another implementation of the present application, an association relationship between the amount of virtual resources that are to be allocated and the sliding track of the slide gesture can be set. For example, in a specific scenario, when a user slides with one finger and slides with three fingers, different amounts of the virtual resources are to be allocated. For example, it can be set that the more fingers used for sliding indicates the larger allocation amount. Certainly, the sliding track can further include a sliding direction, for example, an allocation amount of an upward slide is greater than an allocation amount of a downward slide. A specific setting method can include an association relationship between a combination of any two or more of the previous behavior parameters and the amount of virtual resources that are to be allocated. Implementations are not limited in the present application.

In an implementation of the present application, if the predetermined operation gesture includes moving the device that displays the interface, a behavior parameter value of the predetermined operation gesture can include at least one of the following: movement amplitude, a movement frequency, a movement time, and a movement track.

In the present implementation, the predetermined operation gesture can further include moving, by the user, the device that displays the interface. In this case, when obtaining the predetermined operation gesture, the client can enable a sensor, such as an acceleration sensor or a gravity sensor, coupled to the device. When the user moves the device, the client can obtain behavior parameters of the user by using the sensor. The sensor can feed back different parameter values to the client based on different parameters such as a frequency, amplitude, a time, and a track of moving the device by the user.

In an implementation of the present application, an association relationship between the amount of virtual resources that are to be allocated and a parameter value of the movement frequency can be set. For example, the association relationship includes a direct proportional relationship, to be specific, the higher frequency the user shakes the device, the amount of virtual resources that are to be allocated is larger. In another implementation of the present application, it can be further set that the amount of virtual resources that are to be allocated is in direct proportion to the behavior parameter value of the movement frequency and/or the movement amplitude, to be specific, the higher frequency and/or the larger amplitude the user shakes the device, the amount of virtual resources that are to be allocated is larger. In an implementation of the present application, an association relationship between the amount of virtual resources that are to be allocated and the movement track of moving the device can be further set. For example, an allocation amount corresponding to vertically shaking the device by the user is greater than an allocation amount corresponding to horizontally shaking the device by the user. A specific setting method can include an association relationship between a combination of any two or more of the previous behavior parameters and the amount of virtual resources that are to be allocated. Implementations are not limited in the present application.

As described above, the predetermined operation behavior can further include a biometric feature behavior of the user. For example, the biometric feature behavior can include a plurality of behaviors such as observing the interface by the user, making a sound by the user, and making a facial expression by the user.

In an implementation of the present application, if the biometric feature behavior includes observing the interface by the user, a behavior parameter value of observing the interface by the user includes at least one of the following: an eye observation time and an eye observation track.

In the present implementation, the biometric feature behavior can include observing the interface by the user. In this case, when obtaining the behavior of observing the interface by the user, the client can enable a camera device coupled to the client. The client can track eyeball positions of the user by using the camera device. The camera device can feed back the behavior parameter value of observing the interface by the user to the client based on the eyeball positions of the user. Specifically, the behavior parameter value can include the eye observation time, the eye observation track, etc.

In an implementation of the present application, an association relationship between the amount of virtual resources that are to be allocated and the eye observation time can be set. For example, the association relationship includes a direct proportional relationship, to be specific, the longer time the user observes the interface, the amount of virtual resources that are to be allocated is larger. In another implementation of the present application, an association relationship between the amount of virtual resources that are to be allocated and the eye observation track can be further set. The camera device can obtain, through analysis based on movement of user's eyeballs, a number formed by an eyeball movement track. For example, if the eyeball movement track of the user is similar to "0.5", the amount of virtual resources that are to be allocated is set to 0.5. A specific setting method can include an association relationship between a combination of any two or more of the previous behavior parameters and the amount of virtual resources that are to be allocated. Implementations are not limited in the present application.

In an implementation of the present application, if the biometric feature behavior includes making a sound by the user, a behavior parameter value of making the sound by the user includes at least one of the following: a sound frequency, sound loudness, and a sound keyword, etc.

In the present implementation, the biometric feature behavior can include making the sound by the user. In this case, when obtaining the behavior of making the sound by the user, the client can enable a microphone device coupled to the client. The client can obtain sound information of the user by using the microphone device. The microphone device can feed back the behavior parameter value of the user's sound to the client based on the user's sound. Specifically, the behavior parameter can include the sound frequency, the sound loudness, and the sound keyword.

In an implementation of the present application, an association relationship between the amount of virtual resources that are to be allocated and the sound loudness parameter can be set. For example, the association relationship includes a direct proportional relationship, to be specific, the louder sound made by the user indicates the larger amount of virtual resources that are to be allocated. In an implementation of the present application, an association relationship between the amount of virtual resources that are to be allocated and the sound frequency parameter can be set. For example, the association relationship includes an inverse proportional relationship, to be specific, the higher tone of the user indicates the smaller amount of virtual resources that are to be allocated. In another implementation of the present application, an association relationship between the amount of virtual resources that are to be allocated and the sound keyword parameter can be set. For example, the sound keyword can include a number, a virtual resource unit, etc. For example, the user can speak "5 RMB" to the microphone device, and the amount of virtual resources that are to be allocated is 5 RMB. A specific setting method can include an association relationship between a combination of any two or more of the previous behavior parameters and the amount of virtual resources that are to be allocated. Implementations are not limited in the present application.

In an implementation of the present application, the biometric feature behavior includes making a facial expression by the user, and a parameter value of the facial expression includes an emotion that the facial expression belongs to.

In the present implementation, the biometric feature behavior can include making the facial expression by the user. In this case, when obtaining the facial expression made by the user, the client can enable a camera device and a facial expression recognition module that are coupled to the client. The client can obtain facial image information of the user by using the camera device. The facial expression recognition module can feed back a behavior parameter value of the user's face to the client based on the facial image information of the user. The behavior parameter can include an emotion that a facial expression belongs to. For example, the emotion that the facial expression belongs to can include emotions such as happiness, sadness, excitement, envy, and disgust. Specifically, the facial expression recognition module can obtain different emotions through analysis based on different structures of the facial expression of the user.

In an implementation of the present application, an association relationship between the amount of virtual resources that are to be allocated and the emotion that the facial expression belongs to can be set. For example, a corresponding amount of virtual resources that are to be allocated can be separately set for an emotion that each facial expression belongs to. For example, when the emotion that the facial expression belongs to is envy, an amount of virtual resources that are to be allocated is set to a maximum value, and when the emotion that the facial expression belongs to is disgust, an amount of virtual resources that are to be allocated is set to a minimum value. Specifically, an amount of virtual resources that are to be allocated can be set, in a plurality of other ways, for an emotion that a facial expression belongs to. Implementations are not limited in the present application.

Biometric features involved in the biometric feature behavior in the implementations of the present application can further include an eye feature, a voiceprint, a fingerprint, a palm print, a heartbeat, a pulse, chromosome, DNA, a human teeth bite mark, etc. The eye feature can include biometric features such as iris and sclera. Implementations are not limited in the present application.

S3. Allocate, from the second account to the first account, virtual resources whose amount matches the behavior parameter value.

After the corresponding amount of virtual resources that are to be allocated is set based on the behavior parameter value, the virtual resources whose amount matches the behavior parameter value can be allocated from the second account to the first account.

Specifically, in an implementation of the present application, the allocating, from the second account to the first account, virtual resources whose amount matches the behavior parameter value can include:
SS1: Deduct, from the second account, the virtual resources whose amount matches the behavior parameter value.
SS2: Add the amount of virtual resources to the first account.

In the present implementation, the corresponding amount of virtual resources can be deducted from the second account, and the corresponding amount of virtual resources are added to the first account, so that the virtual resources can be transferred from the second account to the first account.

In an implementation of the present application, a predetermined operation behavior of the user can go through a specific time interval. For example, the predetermined operation behavior can include a quantity of times that the user taps a predetermined location of the display screen within one minute. In this case, a behavior parameter value of the predetermined operation behavior changes with an increase of a quantity of tapping times of the user within one minute. Based on this, in an implementation of the present application, after the obtaining a behavior parameter value of the predetermined operation behavior, the method can further include: displaying, in the interface, the amount of virtual resources that matches the behavior parameter value.

To be specific, the amount of virtual resources is dynamically displayed on the interface, so that the user knows in real time an amount of bonuses that can be paid to the first account, and can further take the next decision (e.g., stop the predetermined operation behavior).

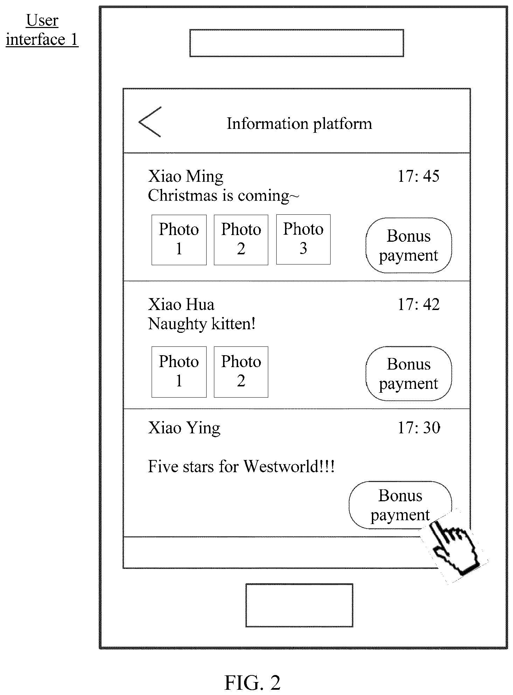

The following describes an application scenario of an implementation of the present application with reference to user interfaces shown in FIG. 2 to FIG. 4.

User interface 1 shown in FIG. 2 is an "information platform" interface of an XX application, a user is Xiao Wang, and a second account is "wang 2016". In the "information platform", information such as personal status and original articles posted by Xiao Wang's friends Xiao Ming, Xiao Hua, Xiao Ying, etc. is displayed. In user interface 1 shown in FIG. 2, a page control element "Bonus payment" can be set in a lower right corner of each piece of information, and Xiao Wang can pay a certain amount of virtual resources to an account corresponding to the information by using the page control element, to show appreciation and praise for the information author.

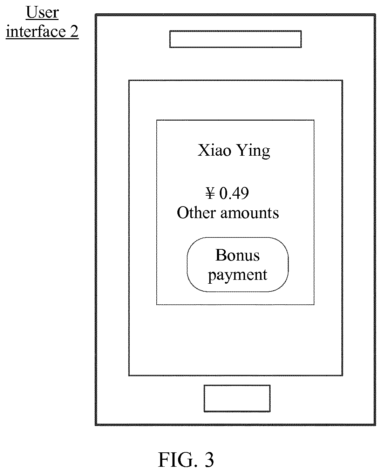

As shown in FIG. 2, Xiao Wang taps a page control element "Bonus payment" corresponding to information posted by Xiao Ying. In the existing technology, after a user taps the page control element, user interface 2 shown in FIG. 3 can be displayed. As shown in FIG. 3, user interface 2 shows information such as an identifier of the first account (i.e., "Xiao Ying") and an amount of bonuses (i.e., 0.49 RMB). The amount of bonuses is randomly generated by the client. The user can also change the amount of bonuses by taping a page control element "Other amount" in user interface 2, until an expected amount is reached. After the amount of bonuses is confirmed, a page control element "Bonus payment" in user interface 2 can be tapped to confirm that the corresponding amount of bonuses is sent to the target account "Xiao Ying".

It can be seen that if bonuses are allocated according to a method for allocating virtual resources in the existing technology, a plurality of times of amount modification need to be performed to obtain an ideal amount of bonuses of a user through allocation, and an operation process is tedious.

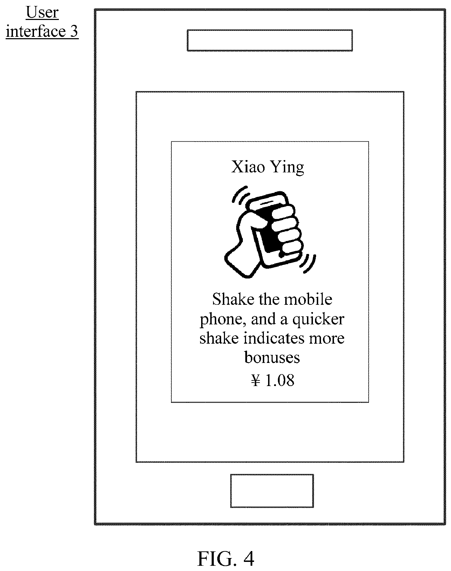

User interface 3 shown in FIG. 4 is an interface of paying bonuses according to the method in the implementations of the present application. As shown in FIG. 4, a gesture prompting a user to shake a client is displayed in user interface 3, and a prompt "shake the mobile phone, and a quicker shake indicates more bonuses" is displayed under the gesture. In addition, as the user shakes the mobile phone, a real-time amount of bonuses can be displayed at the bottom of a display window, for example, a current real-time amount of bonuses is 1.08 RMB. Afterwards, if the user feels that the amount of bonuses exceeds an expected amount, the user can reduce a shaking speed, so that the amount of bonuses can be reduced. If the user feels that the amount of bonuses is lower than an expected amount, the user can increase a shaking speed, so that the amount of bonuses can be increased. An amount of bonuses displayed on user interface 3 is a finally determined amount of bonuses until a predetermined moment is finally reached, for example, a threshold of 30 seconds. The client can deduct the corresponding bonuses from a login account (i.e., Xiao Wang's account "wang 2016") and add the bonuses to Xiao Ying's account.

According to the method for allocating virtual resources provided in the present application, the predetermined operation behavior of the user in the virtual resource allocation interface can be analyzed, to obtain the behavior parameter value of the predetermined operation behavior, and then the virtual resources whose amount matches the behavior parameter value are allocated from the login account to the target account. In the present implementation, the amount of virtual resources is associated with the operation behavior of the user. Therefore, the amount of virtual resources satisfies an intent and preference of the user. Compared with a randomly generated amount of virtual resources that are to be allocated in the existing technology, an amount, of virtual resources that are to be allocated, obtained according to the method provided in the present application satisfies an expectation of the user. In addition, the method for allocating virtual resources based on the operation behavior of the user increases the interest of interaction between the user and the interface, and improves user experience.

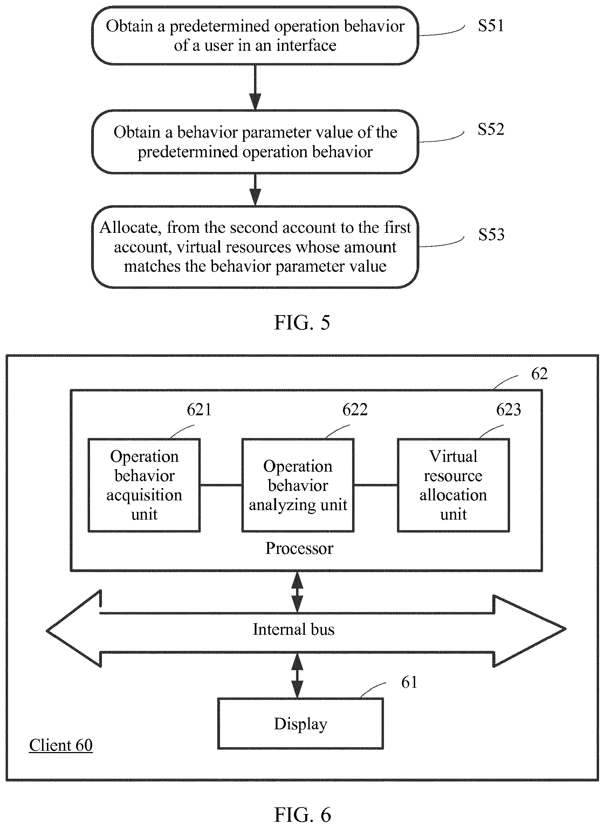

Another aspect of the present application further provides a method for allocating virtual resources from the perspective of a server. A difference from the previously described S1 to S3 methods lies in that the previously described S1 to S3 are performed on a client side. In practice, the server can also complete virtual resource allocation. FIG. 5 is a method flowchart illustrating another implementation of a method for allocating virtual resources, according to the present application. As shown in FIG. 5, the method can include the following steps.

S51: Obtain a predetermined operation behavior of a user in an interface.

S52: Obtain a behavior parameter value of the predetermined operation behavior.

S53: Allocate, from the second account to the first account, virtual resources whose amount matches the behavior parameter value.

In the present implementation, the server can obtain the predetermined operation behavior of the user in the interface from the client. For subsequent S52 and S53, references can be made to implementations of S2 and S3 in the present application. Details are omitted in the present application.

Corresponding to steps S1 to S3, as shown in FIG. 6, the present application further provides a client 60, and the client 60 can include a display 61 and a processor 62.

The display 61 is configured to display an interface for allocating virtual resources to the first account.

The processor 62 includes an operation behavior acquisition unit 621, configured to obtain a predetermined operation behavior of a user in the interface; an operation behavior analyzing unit 622, configured to obtain a behavior parameter value of the predetermined operation behavior; and a virtual resource allocation unit 633, configured to allocate, from the second account to the first account, virtual resources whose amount matches the behavior parameter value.

Optionally, in an implementation of the present application, the display 61 is further configured to display, in the interface, the amount of virtual resources that matches the behavior parameter value.

According to the client provided in the present application, the predetermined operation behavior of the user in the virtual resource allocation interface can be analyzed, to obtain the behavior parameter value of the predetermined operation behavior, and then the virtual resources whose amount matches the behavior parameter value are allocated from the second account to the first account. In the present implementation, the amount of virtual resources is associated with the operation behavior of the user. Therefore, the amount of virtual resources satisfies an intent and preference of the user. Compared with a randomly generated amount of virtual resources that are to be allocated in the existing technology, an amount, of virtual resources that are to be allocated, obtained according to the method provided in the present application satisfies an expectation of the user. In addition, the method for allocating virtual resources based on the operation behavior of the user increases the interest of interaction between the user and the interface, and improves user experience.

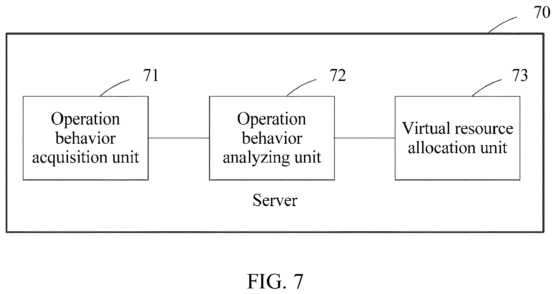

Corresponding to steps S51 to S53, as shown in FIG. 7, the present application further provides a server 70, and the server 70 can include an operation behavior acquisition unit 71, configured to obtain a predetermined operation behavior of a user in an interface; an operation behavior analyzing unit 72, configured to obtain a behavior parameter value of the predetermined operation behavior; and a virtual resource allocation unit 73, configured to allocate, from the second account to the first account, virtual resources whose amount matches the behavior parameter value.

According to the server provided in the present application, the predetermined operation behavior of the user in the virtual resource allocation interface can be analyzed, to obtain the behavior parameter value of the predetermined operation behavior, and then the virtual resources whose amount matches the behavior parameter value are allocated from the second account to the first account. In the present implementation, the amount of virtual resources is associated with the operation behavior of the user. Therefore, the amount of virtual resources satisfies an intent and preference of the user. Compared with a randomly generated amount of virtual resources that are to be allocated in the existing technology, an amount, of virtual resources that are to be allocated, obtained according to the method provided in the present application satisfies an expectation of the user. In addition, the method for allocating virtual resources based on the operation behavior of the user increases the interest of interaction between the user and the interface, and improves user experience.

In the 1990s, whether technology improvement is hardware improvement (e.g., improvement of a circuit structure such as a diode, a transistor, or a switch) or software improvement (improvement of a method procedure) can be easily distinguished. However, as technologies develop, the current improvement for many method procedures can be considered as a direct improvement of a hardware circuit structure. A designer usually programs an improved method procedure to a hardware circuit, to obtain a corresponding hardware circuit structure. Therefore, a method procedure can be improved by using a hardware entity module. For example, a programmable logic device (PLD) (e.g., a field programmable gate array (FPGA)) is such an integrated circuit, and a logical function of the programmable logic device is determined by a user through device programming. The designer performs programming to "integrate" a digital system to a PLD without requesting a chip manufacturer to design and produce an application-specific integrated circuit chip. In addition, the programming is mostly implemented by modifying "logic compiler" software instead of manually making an integrated circuit chip. This is similar to a software compiler used for program development and compiling. However, original code before compiling is also written in a specific programming language, which is referred to as a hardware description language (HDL). There are many HDLs, such as Advanced Boolean Expression Language (ABEL), Altera Hardware Description Language (AHDL), Confluence, Cornell University Programming Language (CUPL), HDCal, Java Hardware Description Language (JHDL), Lava, Lola, MyHDL, PALASM, and Ruby Hardware Description Language (RHDL). Currently, Very-High-Speed Integrated Circuit Hardware Description Language (VHDL) and Verilog are most commonly used. A person skilled in the existing technology should also understand that a hardware circuit that implements a logical method procedure can be readily obtained once the method procedure is logically programmed by using the several described hardware description languages and is programmed into an integrated circuit.

A controller can be implemented in any appropriate method. For example, the controller can be a microprocessor, a processor, or a computer readable medium, a logic gate, a switch, an application-specific integrated circuit (ASIC), a programmable logic controller, or an embedded microcontroller that stores computer readable program code (e.g., software or firmware) that can be executed by the processor (or the microprocessor). Examples of the controller include but are not limited to the following microcontrollers: ARC 625D, Atmel AT91SAM, Microchip PIC18F26K20, or Silicon Labs C8051F320. A memory controller can also be implemented as a part of control logic of the memory. A person skilled in the existing technology also knows that a controller can be implemented by using a pure computer readable program code method, and the method steps can be logically programmed to enable the controller to implement the same functions in forms of a logic gate, a switch, an application-specific integrated circuit, a programmable logic controller, an embedded microcontroller, etc. Therefore, the controller can be considered as a hardware component, and an apparatus included in the controller and configured to implement various functions in the controller can also be considered as a structure in a hardware component. Alternatively, an apparatus configured to implement various functions can be considered as a software module that can implement the method or a structure in a hardware component.

The unit illustrated in the previous implementations can be implemented by using a computer chip or an entity, or can be implemented by using a product that has a certain function. A typical implementation device is a computer. Specifically, the computer can be, for example, a personal computer, a laptop computer, a cellular phone, a camera phone, a smartphone, a personal digital assistant, a media player, a navigation device, an email device, a game console, a tablet computer, a wearable device, or a combination of any of these devices.

For ease of description, the previous client or server is described by dividing the functions into various units. When the present application is implemented, the functions of the units can be implemented in one or more pieces of software and/or hardware.

A person skilled in the existing technology should understand that an implementation of the present disclosure can be provided as a method, a system, or a computer program product. Therefore, the present disclosure can use a form of hardware only implementations, software only implementations, or implementations with a combination of software and hardware. In addition, the present disclosure can use a form of a computer program product implemented on one or more computer-usable storage media (including but not limited to a magnetic disk memory, a compact disc read-only memory (CD-ROM), and an optical memory) that include computer-usable program code.

The present disclosure is described with reference to the flowcharts and/or block diagrams of the method, the device (system), and the computer program product based on the implementations of the present disclosure. It is worthwhile to note that computer program instructions can be used to implement each process and/or each block in the flowcharts and/or the block diagrams and a combination of a process and/or a block in the flowcharts and/or the block diagrams. These computer program instructions can be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions can be stored in a computer readable memory that can instruct the computer or the another programmable data processing device to work in a specific way, so that the instructions stored in the computer readable memory generate an artifact that includes an instruction apparatus. The instruction device implements a specific function in one or more processes in the flowcharts and/or in one or more blocks in the block diagrams.

These computer program instructions can be loaded onto the computer or the another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In a typical configuration, a computing device includes one or more processors (CPU), one or more input/output interfaces, one or more network interfaces, and one or more memories.

The memory may include a non-persistent memory, a random access memory (RAM), and/or a non-volatile memory in a computer readable medium, for example, a read-only memory (ROM) or a flash memory (flash RAM). The memory is an example of the computer readable medium.

The computer readable medium includes persistent, non-persistent, movable, and unmovable media that can store information by using any method or technology. The information can be a computer readable instruction, a data structure, a program module, or other data. Examples of a computer storage medium include but are not limited to a phase-change random access memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a cassette, a cassette magnetic disk storage or another magnetic storage device or any other non-transmission medium. The computer storage medium can be used to store information that can be accessed by a computing device. As described in the present specification, the computer readable medium does not include computer readable transitory media (transitory media) such as a modulated data signal and a carrier.

It is worthwhile to further note that the terms "include", "comprise", or their any other variants are intended to cover a non-exclusive inclusion, so that a process, a method, a product or a device that includes a list of elements not only includes those elements but also includes other elements which are not expressly listed, or further includes elements inherent to such a process, method, product, or device. An element preceded by "includes a..." does not, without more constraints, preclude the existence of additional identical elements in the process, method, article, or device that includes the element.

A person skilled in the existing technology should understand that an implementation of the present application can be provided as a method, a system, or a computer program product. Therefore, the present application can use a form of hardware only implementations, software only implementations, or implementations with a combination of software and hardware. In addition, the present application can use a form of a computer program product implemented on one or more computer-usable storage media (including but not limited to a magnetic disk memory, a compact disc read-only memory (CD-ROM), and an optical memory) that include computer-usable program code.

The present application can be described in common contexts of computer executable instructions executed by a computer, such as a program module. Generally, the program module includes a routine, a program, an object, a component, a data structure, etc. executing a specific task or implementing a specific abstract data type. The present application can also be practiced in distributed computing environments. In these distributed computing environments, tasks are executed by remote processing devices that are connected by using a communications network. In the distributed computing environments, the program module can be located in local and remote computer storage media that include storage devices.

The implementations of the present specification are described in a progressive way. For same or similar parts in the implementations, references can be made to the implementations. Each implementation focuses on a difference from other implementations. Particularly, a client or server implementation is basically similar to the method implementation, and therefore is described briefly. For related parts, references can be made to partial descriptions in the method implementation.

The previous descriptions are merely implementations of the present application, and are not intended to limit the present application. A person skilled in the art can make various modifications and changes to the present application. Any modification, equivalent replacement, or improvement made without departing from the spirit and principle of the present application shall fall within the scope of the claims in the present application.

## Claims

1. A method for allocating virtual resources, wherein the method comprises:
displaying an interface for allocating virtual resources to the first account, and obtaining a predetermined operation behavior of a user in the interface;
obtaining a behavior parameter value of the predetermined operation behavior; and
allocating, from the second account to the first account, virtual resources whose amount matches the behavior parameter value.

2. The method according to claim 1, wherein the allocating, from the second account to the first account, virtual resources whose amount matches the behavior parameter value comprises:
deducting, from the second account, the virtual resources whose amount matches the behavior parameter value; and
adding the amount of virtual resources to the first account.

3. The method according to claim 1, wherein the predetermined operation behavior comprises a predetermined operation gesture of the user in the interface.

4. The method according to claim 3, wherein if the predetermined operation gesture comprises tapping the interface, the behavior parameter value of the predetermined operation gesture comprises at least one of the following: tapping strength, a tapping frequency, and a tapping time.

5. The method according to claim 3, wherein if the predetermined operation gesture comprises sliding on the interface, the behavior parameter value of the predetermined operation gesture comprises at least one of the following: a sliding amplitude, a sliding frequency, a sliding time, a sliding track, and sliding strength.

6. The method according to claim 3, wherein if the predetermined operation gesture comprises moving a device displaying the interface, and the behavior parameter value of the predetermined operation gesture comprises at least one of the following: a movement frequency, movement amplitude, a movement time, and a movement track.

7. The method according to claim 1, wherein the predetermined operation behavior comprises a biometric feature behavior of the user.

8. The method according to claim 7, wherein if the biometric feature behavior comprises observing the interface by the user, a behavior parameter value of observing the interface by the user comprises at least one of the following: an eye observation time and an eye observation track.

9. The method according to claim 7, wherein if the biometric feature behavior comprises making a sound by the user, a behavior parameter value of making the sound by the user comprises at least one of the following: a sound frequency, a sound loudness, and a sound keyword.

10. The method according to claim 7, wherein if the biometric feature behavior comprises making a facial expression by the user, and a parameter value of the facial expression comprises an emotion that the facial expression belongs to.

11. The method according to claim 1, wherein after the obtaining a behavior parameter value of the predetermined operation behavior, the method further comprises:
displaying, in the interface, the amount of virtual resources that matches the behavior parameter value.

12. A method for allocating virtual resources, wherein the method comprises:
obtaining a predetermined operation behavior of a user in an interface;
obtaining a behavior parameter value of the predetermined operation behavior; and
allocating, from the second account to the first account, virtual resources whose amount matches the behavior parameter value.

13. A client, wherein the client comprises a display and a processor, wherein
the display is configured to display an interface for allocating virtual resources to the first account; and
the processor comprises:
an operation behavior acquisition unit, configured to obtain a predetermined operation behavior of a user in the interface;
an operation behavior analyzing unit, configured to obtain a behavior parameter value of the predetermined operation behavior; and
a virtual resource allocation unit, configured to allocate, from the second account to the first account, virtual resources whose amount matches the behavior parameter value.

14. The client according to claim 13, wherein the display is further configured to display, in the interface, the amount of virtual resources that matches the behavior parameter value.

15. A server, wherein the server comprises:
an operation behavior acquisition unit, configured to obtain a predetermined operation behavior of a user in an interface;
an operation behavior analyzing unit, configured to obtain a behavior parameter value of the predetermined operation behavior; and
a virtual resource allocation unit, configured to allocate, from the second account to the first account, virtual resources whose amount matches the behavior parameter value.
